# EUROPEAN PATENT APPLICATION

(11) **EP 4 598 249 A1**
(43) Date of publication of application: **06.08.2025**
(21) Application number: 23870588.3
(22) Date of filing: 21.09.2023
(51) Int. Cl.: H04W 76/10

(54) **NETWORK CONNECTION METHOD AND APPARATUS, AND ELECTRONIC DEVICE AND READABLE STORAGE MEDIUM**

(30) Priority: 27.09.2022 CN 202211182901
(71) Applicant: Vivo Mobile Communication Co., Ltd., Dongguan, Guangdong 523863 (CN)
(72) Inventor: ZHANG, Jiayong, Dongguan, Guangdong 523863 (CN)
(74) Representative: Lavoix
(86) International application number: PCT/CN2023/120452
(87) International publication number: WO 2024/067356

(57) **Abstract**

This application discloses a network connection method and apparatus, an electronic device, and a readable storage medium, and pertains to the field of communication technology. The method includes: establishing a first packet data network PDN connection through a first mobile communication network; sending registration request information to a second mobile communication network in a case that a data network of an electronic device is in a disabled state; and disconnecting the first PDN connection in a case that the first PDN connection is handed over from the first mobile communication network to the second mobile communication network.

## Description

### CROSS-REFERENCE TO RELATED APPLICATIONS

This application claims the priority of Chinese patent application No. 202211182901.8, filed with the China National Intellectual Property Administration on September 27, 2022 and entitled "NETWORK CONNECTION METHOD AND APPARATUS, ELECTRONIC DEVICE, AND READABLE STORAGE MEDIUM", which is incorporated herein by reference in its entirety.

### TECHNICAL FIELD

This application pertains to the field of communication technology, and specifically relates to a network connection method and apparatus, an electronic device, and a readable storage medium.

### BACKGROUND

With the development of information technology, people are accustomed to using electronic devices for online socializing, work, study, and the like. In environments without wireless networks, they can only use mobile communication networks, that is, data networks, for internet access. Because data networks are billed by traffic, most users choose to disable the data network when it is not needed, so as to reduce data consumption.

Currently, in some cases, after users disable the data network, they can still receive information sent by the network device side, resulting in traffic consumption that does not meet user expectations.

### SUMMARY

Embodiments of this application aim to provide a network connection method and apparatus, an electronic device, and a readable storage medium, which can solve the problem of traffic consumption that does not meet user expectations in the prior art.

According to a first aspect, an embodiment of this application provides a network connection method, where the method includes:
establishing a first packet data network PDN connection through a first mobile communication network;
sending registration request information to a second mobile communication network in a case that a data network of the electronic device is in a disabled state; and
disconnecting the first PDN connection in a case that the first PDN connection is handed over from the first mobile communication network to the second mobile communication network.

According to a second aspect, an embodiment of this application provides a network connection apparatus, where the apparatus includes:
an establishment module, configured to establish a first packet data network PDN connection through a first mobile communication network;
a sending module, configured to send registration request information to a second mobile communication network in a case that a data network of the electronic device is in a disabled state; and
a disconnection module, configured to disconnect the first PDN connection in a case that the first PDN connection is handed over from the first mobile communication network to the second mobile communication network.

According to a third aspect, an embodiment of this application provides an electronic device. The electronic device includes a processor and a memory, the memory stores a program or instructions capable of running on the processor, and when the program or instructions are executed by the processor, the steps of the method according to the first aspect are implemented.

According to a fourth aspect, an embodiment of this application provides a readable storage medium, where a program or instructions are stored in the readable storage medium, and when the program or the instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product, where the program product is stored in a storage medium, and the program product is executed by at least one processor to implement the method according to the first aspect.

In the embodiments of this application, a first packet data network PDN connection is established through the first mobile communication network. If the data network is in a disabled state, it indicates that the user does not need to use the data network. Therefore, in a case that the data network of the electronic device is in a disabled state, registration request information is sent to the second mobile communication network. In a case that the first PDN connection is handed over from the first mobile communication network to the second mobile communication network, the first PDN connection is disconnected. Herein, in the process of registering the second mobile communication network for internet access, the first PDN connection can be entirely disconnected, ensuring that the electronic device no longer receives information from the network device side when the data network is in a disabled state. Moreover, in a case that the first PDN connection is handed over to the second mobile communication network, the first PDN connection is disconnected, which complies with operator requirements. This can reduce the data traffic generated by the electronic device and reduce the power consumption of the electronic device.

### BRIEF DESCRIPTION OF DRAWINGS

FIG. 1 is a schematic diagram of an application scenario according to an embodiment of this application;
FIG. 2 is a flowchart of a network connection method according to an embodiment of this application;
FIG. 3 is a structural diagram of a network connection apparatus according to an embodiment of this application;
FIG. 4 is a first schematic diagram of a hardware structure of an electronic device according to an embodiment of this application; and
FIG. 5 is a second schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in this way is used interchangeably in appropriate circumstances so that the embodiments of this application can be implemented in other orders than the order illustrated or described herein. In addition, "first", "second", and the like are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

A packet data network (Packet Data Network, PDN) is a data connection between electronic devices and the network device side and also a data connection used by users to access the network.

Modem (MODEM), short for modulator-demodulator, is a type of computer hardware that can translate the digital signals of a computer into analog signals that can be transmitted along conventional telephone lines, and these analog signals can be received by another modem at the other end of the line and translated into a language that the computer can understand. This simple process completes communication between two computers.

An application processor, (Application Processor, AP) is an ultra-large-scale integrated circuit that extends audio and video functions and dedicated interfaces based on a low-power-consumption central processing unit.

The 4th generation mobile communication technology (the 4th generation mobile communication technology, 4G) is a technology capable of transmitting high-quality video images with an image transmission quality comparable to that of high-definition television. The 4G mobile communication technology can find a fastest and most efficient communication path among multiple different network systems, platforms, and wireless communication interfaces to perform the most real-time transmission, reception, positioning, and other actions.

The 5th generation mobile communication technology (the 5th generation mobile communication technology, 5G) is a new generation broadband mobile communication technology featuring high speed, low latency, and large connection. The 5G communication facilities are the network infrastructure for realizing the interconnection of humans, machines, and things.

A primary card is a subscriber identity module (Subscriber Identity Module, SIM) that provides data services in an electronic device.

A secondary card is a SIM card that does not provide data services in an electronic device.

In sleep mode, the sleep period of a user is intelligently determined, so that during the preset time period, the data network function is disabled and only necessary functions such as phone and SMS are supported.

The network connection method provided in the embodiments of this application can at least be applied to the following application scenarios. Details are as follows.

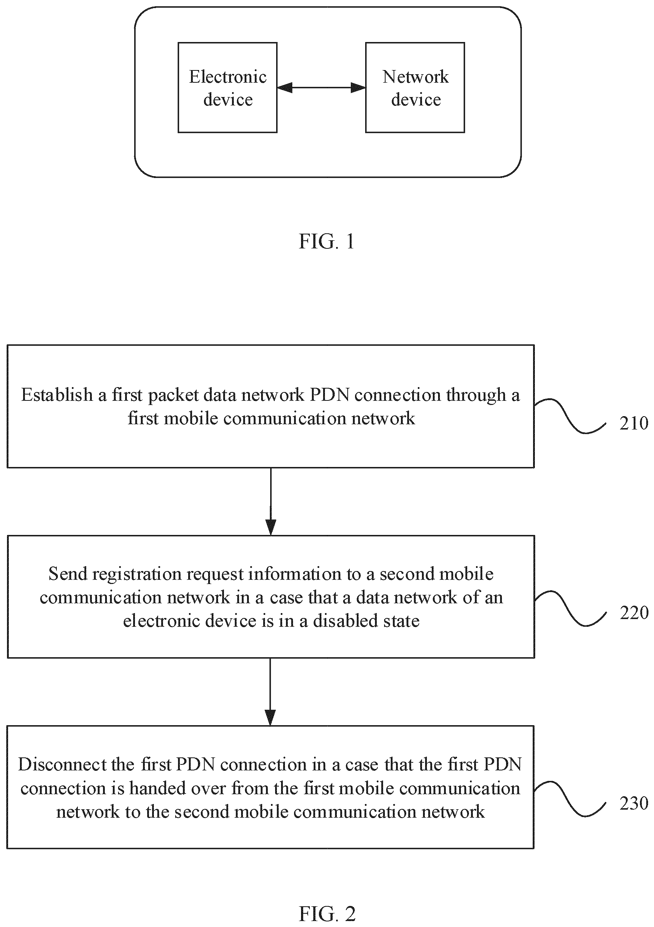

As shown in FIG. 1, an electronic device uses a data network in the process of interacting with a network device, where the network device may be a core network. At present, most electronic devices support dual SIM cards. A primary card is responsible for providing voice and data services, while a secondary card is only responsible for providing voice services. For fast switching between the primary and secondary cards, the secondary card has also established a PDN connection, so that when the secondary card switches to the primary card, a new PDN connection does not need to be established, ensuring fast switching and facilitating user use.

When the primary card camps on 5G, traffic consumption is also very fast. To reduce power and traffic consumption, users sometimes actively disable the data network. The user-expected operation state of the electronic device is that after the data network is disabled, no traffic is consumed and more power is saved. To improve battery life, many electronic devices also provide sleep mode for users. When the preset time period is reached, if the user turns off the screen and goes into standby, the electronic device automatically enters sleep mode, disables the data network, and disconnects the data connection between the AP and the MODEM. If the electronic device is currently registered with 5G, the PDN connection is immediately disconnected, that is, the data connection between the MODEM and the network device is disconnected. In this way, the AP does not send data to the MODEM, and the network does not send data to the MODEM. Therefore, there is no data paging, allowing the MODEM to have more time to sleep, achieving the purpose of power saving.

However, in specific scenarios, when the electronic device is in a 4G network environment, if the data network is disabled, disconnection of the PDN connection is not allowed, that is, disconnection of the data connection between the modem and the network device is not allowed. In this case, the network device can still page the primary card or secondary card at any time.

Based on big data statistics, when the electronic device is in a weak 5G signal area, if the data network is disabled, the probability of the primary card camping on the 4G network is very high. In other words, the probability of occurrence of the above specific scenarios is very high.

In the specific scenarios, after the data network is disabled, the primary card does not disconnect the PDN connection, and the MODEM still maintains the data connection to the network device. After the primary card switches from 4G to 5G, the PDN connection seamlessly switches from 4G to 5G.

In other words, although the data network of the electronic device is disabled, the primary card still maintains the data connection to the network device. The network device can still send data to the MODEM. The specific process is as follows: The network device sends first data to the MODEM. After the MODEM establishes a radio resource control (Radio Resource Control, RRC) link, since the data connection between the AP and the MODEM has been broken, the first data received by the MODEM cannot be sent to the AP, and the AP cannot receive and process the first data. As a result, the network device cannot receive acknowledgement from application software on the AP side. The network device may repeatedly send the first data to the electronic device, making the sleep time of the MODEM quite short, consuming a lot of power, and also consuming a large amount of traffic without the user's knowledge.

In addition, disabling the data network of the primary card does not affect the secondary card. After the secondary card switches from 4G to 5G, the PDN connection also seamlessly switches to 5G. Based on big data statistics, the power consumption caused by frequent paging of the secondary card in 5G is greater than the power consumption caused by frequent paging in 4G. Frequent paging of the secondary card brings power consumption. Additionally, when the secondary card responds to the paging to establish an air interface link, it also occupies radio frequency (Radio Frequency, RF) resources, affecting the service smoothness of the primary card.

To address the problems in the related technology, embodiments of this application provide a network connection method and apparatus, an electronic device, and a storage medium, which can solve the problem of traffic consumption that does not meet user expectations in the related technology.

The following details the network connection method provided in the embodiments of this application through specific embodiments and application scenarios thereof with reference to the accompanying drawings.

FIG. 2 is a flowchart of a network connection method according to an embodiment of this application.

As shown in FIG. 2, the network connection method may include steps 210 to 230. The method is applied to a network connection apparatus, and is specifically as follows:
Step 210. Establish a first packet data network PDN connection through a first mobile communication network.

For example, the first mobile communication network is 4G.

Step 220. Send registration request information to a second mobile communication network in a case that a data network of an electronic device is in a disabled state.

The second mobile communication network consumes more network resources than the first mobile communication network. For example, the first mobile communication network is 4G, and the second mobile communication network is 5G.

Once the electronic device is handed over from the first mobile communication network to the second mobile communication network, if it is detected that the data network has once been disabled, that is, the data network is in a disabled state, the electronic device sends registration request information to the second mobile communication network.

Since registration is required upon each network connection, that is, registration request information for the second mobile communication network needs to be sent to the network device, the first PDN connection can be disconnected at the opportunity of registering with the second mobile communication network.

Subsequently, if the electronic device switches back to 4G due to weak 5G signals, there is no first PDN connection in 4G. In this way, the network does not frequently page the MODEM in the 4G or 5G networks.

In a possible embodiment, before step 220, the following step may be further included:
in a case that a network switching condition is met, handing over the first PDN connection from the first mobile communication network to the second mobile communication network according to preset protocol conversion information.

The handing over the first PDN connection from the first mobile communication network to the second mobile communication network specifically means that after the switching to the second mobile communication network, the internet protocol (Internet Protocol, IP) address used by the electronic device in the first mobile communication network can still be used, that is, the IP address does not change.

The network switching condition includes at least one of the following:
a signal strength of the second mobile communication network is greater than a preset threshold;
a first instruction input by a user is received, where the first instruction is used to instruct to switch to the second mobile communication network; and
a second instruction sent by a network device is received, where the second instruction is used to instruct to switch to the second mobile communication network.

In a case that the signal strength of the second mobile communication network is greater than the preset threshold, the first PDN connection may be handed over from 4G to 5G according to preset protocol conversion information.

According to network protocol requirements, the first PDN connection is switched from 4G to 5G, or from 5G to 4G. For smooth service, the first PDN connection can seamlessly switch between 4G and 5G.

In a case that the first instruction input by a user is received, the first PDN connection may be handed over from 4G to 5G according to preset protocol conversion information, where the first instruction may be an instruction for setting the data network by the user in the settings list.

In a case that the second instruction sent by a network device is received, the first PDN connection may be handed over from 4G to 5G according to preset protocol conversion information, where the second instruction may be an instruction for setting the data network by the network device.

In a possible embodiment, before step 220, the following step may be further included:
in a case that a user input for disabling the data network is received, switching the data network to a disabled state; or
in a case that the electronic device is in a target operation state, switching the data network to a disabled state.

If the user does not need to use the data network, an input for disabling the data network can be performed. In a case that the user input for disabling the data network is received, the data network is switched to a disabled state.

The switching, in a case that the electronic device is in a preset operation state, the data network to a disabled state specifically includes: switching the data network to a disabled state in a case that it is within a preset time period and no user operation is received.

The preset operation state may be a sleep mode preset by the electronic device. The preset time period may be a preset sleep time period, such as 12:00 a.m. to 6:00 a.m. If it is within the preset time period and no user operation is received, it indicates that the user does not need to use the data network.

The switching the data network to a disabled state may specifically include: sending, by the AP, a data network disconnection instruction to the MODEM to switch the data network to a disabled state.

Step 230. Disconnect the first PDN connection in a case that the first PDN connection is handed over from the first mobile communication network to the second mobile communication network.

Big data shows that the electronic device establishes the first PDN connection through 4G only when the 5G signal strength is weak. However, the electronic device always attempts to provide 5G service preferentially, so the probability of switching from 4G to 5G is very high. After the switching from 4G to 5G, the first PDN connection in 4G is seamlessly handed over to 5G, and there is no need to establish an additional first PDN connection in 5G.

Similarly, in the case of switching from 5G to 4G, the PDN connection in 5G is handed over to 4G, and there is no need to establish a PDN connection in 4G. The PDN connection may include an IP address of the user and network access information. The network access information indicates a network access technology. It is a parameter that needs to be set for accessing the internet through the electronic device, and determines an access method used by the electronic device to access the network.

In a possible embodiment, step 230 may specifically include the following step:
in a case that the first PDN connection is handed over from the first mobile communication network to the second mobile communication network, sending disconnection request information to the network device, where the disconnection request information is used to request the network device to disconnect the first PDN connection.

In a case that registration accept information corresponding to the registration request information is received, it indicates that the first PDN connection has been handed over from the first mobile communication network to the second mobile communication network. That is, after the electronic device switches to 5G, if the MODEM finds that the data network of the electronic device is in a disabled state, the MODEM instructs the network device to disconnect the first PDN connection.

After the network device disconnects the first PDN connection, the network device no longer know the IP address of the electronic device and thus cannot continue to send data to the IP address of the electronic device. That is, the electronic device has totally disconnected from the data network and no data traffic is generated.

This implementation complies with the operator's protocol. The first PDN connection is not disconnected in 4G, but the first PDN connection is disconnected in 5G.

This can prevent the primary and secondary cards from maintaining the first PDN connection after switching from 4G to 5G, thereby preventing the problems of power consumption and traffic consumption caused by the network frequently paging the terminal, and improving user experience.

In a possible embodiment, the above steps 210 to 230 are performed based on a first subscriber identity module SIM card, and the method may further include:
sending the registration request information to the second mobile communication network in a case that a second SIM card establishes a second PDN connection through the first mobile communication network; and
disconnecting the second PDN connection in a case that the second SIM card hands over the second PDN connection from the first mobile communication network to the second mobile communication network.

The first SIM card is the primary card, and that the above steps 210 to 230 are performed based on a first SIM card may specifically include:
in a case that the data network is in a disabled state, controlling the first SIM card to send registration request information for the second mobile communication network to the network device, so as to subsequently send disconnection request information to the network device in a case that registration accept information corresponding to the registration request information is received, allowing the MODEM to have more time to sleep without consuming data traffic of the electronic device.

The second SIM card is the secondary card, and after the secondary card switches from 4G to 5G, there is no need to determine whether the data network is disabled, and the second SIM card can be directly controlled to send the registration request information for the second mobile communication network to the network device, so as to subsequently request disconnection of the second PDN connection. Herein, disconnection of the second PDN connection can be directly requested, which can save network resources.

Herein, in a case that the second SIM card establishes a second PDN connection through the first mobile communication network, there is no need to determine whether the data network is in a disabled state, and the second SIM card can be directly controlled to send registration request information for the second mobile communication network to the network device. Since the secondary card does not provide data services, disconnecting the second PDN connection does not affect user experience and can prevent frequent data paging in the second mobile communication network, preventing the second SIM card from occupying the resources of the first SIM card and consuming data traffic.

In a possible embodiment, the above steps 210 to 230 are performed based on a third SIM card, and the method may further include:
in a case that a fourth SIM card is in a network environment of the second mobile communication network, prohibiting the fourth SIM card from establishing a PDN connection.

The third SIM card is the primary card, and the fourth SIM card is the secondary card. If the fourth SIM card is in the network environment of the second mobile communication network, the fourth SIM card is prohibited from establishing a PDN connection.

Herein, since the secondary card does not provide data services, prohibiting the fourth SIM card from establishing a PDN connection does not affect user experience and can avoid frequent data paging in the second mobile communication network, preventing the fourth SIM card from occupying the resources of the third SIM card and consuming data traffic.

In a possible embodiment, in a case that a user input for enabling the data network is received, the AP sends a PDN connection request to the MODEM to immediately restore the establishment of the PDN connection.

In the embodiments of this application, a first packet data network PDN connection is established through the first mobile communication network. If the data network is in a disabled state, it indicates that the user does not need to use the data network. Therefore, in a case that the data network of the electronic device is in a disabled state, registration request information is sent to the second mobile communication network. In a case that the first PDN connection is handed over from the first mobile communication network to the second mobile communication network, the first PDN connection is disconnected. Herein, in the process of registering the second mobile communication network for internet access, the first PDN connection can be entirely disconnected, ensuring that the electronic device no longer receives information from the network device side when the data network is in a disabled state. Moreover, in a case that the first PDN connection is handed over to the second mobile communication network, the first PDN connection is disconnected, which complies with operator requirements. This can reduce the data traffic generated by the electronic device and reduce the power consumption of the electronic device.

The network connection method provided in the embodiments of this application can be executed by a network connection apparatus. In the embodiments of this application, the network connection method being executed by a network connection apparatus is used as an example to describe a network connection apparatus provided in an embodiment of this application.

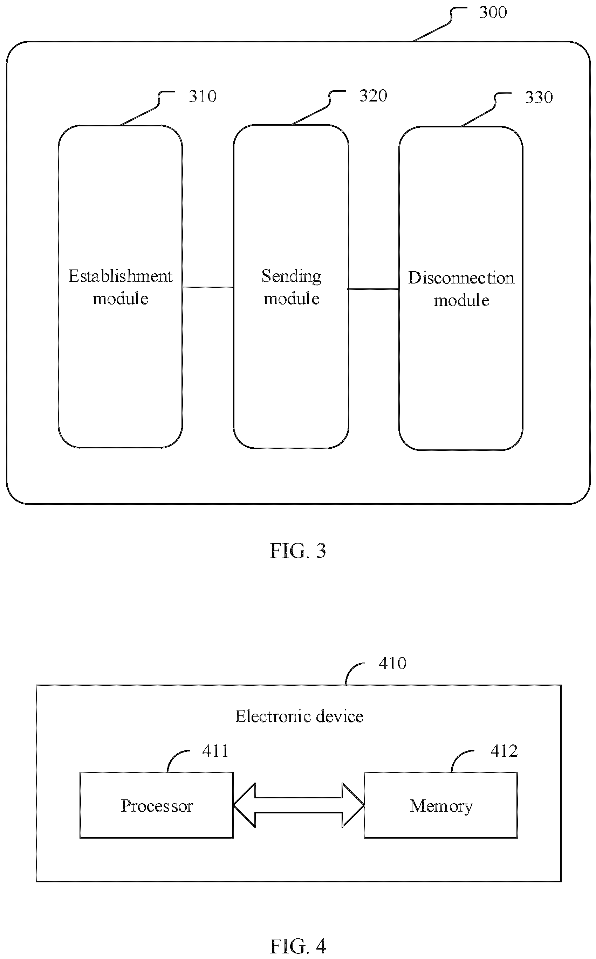

FIG. 3 is a block diagram of a network connection apparatus according to an embodiment of this application. The apparatus 300 includes:
an establishment module 310, configured to establish a first packet data network PDN connection through a first mobile communication network;
a sending module 320, configured to send registration request information to a second mobile communication network in a case that a data network of an electronic device is in a disabled state; and
a disconnection module 330, configured to disconnect the first PDN connection in a case that the first PDN connection is handed over from the first mobile communication network to the second mobile communication network.

In a possible embodiment, the apparatus 300 may further include: a handover module, configured to hand over the first PDN connection from the first mobile communication network to the second mobile communication network according to preset protocol conversion information in a case that a network switching condition is met.

In a possible embodiment, the disconnection module 330 is specifically configured to:
in a case that the first PDN connection is handed over from the first mobile communication network to the second mobile communication network, sending disconnection request information to the network device, where the disconnection request information is used to request the network device to disconnect the first PDN connection.

In a possible embodiment, the apparatus 300 may further include:
a first switching module, configured to switch the data network to a disabled state in a case that a user input for disabling the data network is received; and
a second switching module, configured to switch the data network to a disabled state in a case that the electronic device is in a target operation state.

In a possible embodiment, the network switching condition includes at least one of the following:
a signal strength of the second mobile communication network is greater than a preset threshold;
a first instruction input by a user is received, where the first instruction is used to instruct to switch to the second mobile communication network; and
a second instruction sent by a network device is received, where the second instruction is used to instruct to switch to the second mobile communication network.

In a possible embodiment, the steps that the establishment module 310, the sending module 320, and the disconnection module 330 are configured to perform are performed based on a first subscriber identity module SIM card, and the apparatus 300 may further include:
a first sending module, configured to send the registration request information to the second mobile communication network in a case that a second SIM card establishes a second PDN connection through the first mobile communication network; where
the disconnection module 330 is further configured to disconnect the second PDN connection in a case that the second SIM card hands over the second PDN connection from the first mobile communication network to the second mobile communication network.

In a possible embodiment, the steps that the establishment module 310, the sending module 320, and the disconnection module 330 are configured to perform are performed based on a third SIM card, and the apparatus 300 may further include:
a prohibition module, configured to, in a case that a fourth SIM card is in a network environment of the second mobile communication network, prohibit the fourth SIM card from establishing a PDN connection.

In summary, the first packet data network PDN connection is established through the first mobile communication network. If the data network is in a disabled state, it indicates that the user does not need to use the data network. Therefore, in a case that the data network of the electronic device is in a disabled state, the registration request information is sent to the second mobile communication network, and in a case that the first PDN connection is handed over from the first mobile communication network to the second mobile communication network, the first PDN connection is disconnected. Herein, in the process of registering the second mobile communication network for internet access, the first PDN connection can be entirely disconnected, ensuring that the electronic device no longer receives information from the network device side when the data network is in a disabled state. Moreover, in a case that the first PDN connection is handed over to the second mobile communication network, the first PDN connection is disconnected, which complies with operator requirements. This can reduce the data traffic generated by the electronic device and reduce the power consumption of the electronic device.

The network connection apparatus in the embodiment of this application may be an electronic device or a component in the electronic device, such as an integrated circuit or a chip. The electronic device may be a terminal or another device different from the terminal. For example, the electronic device may be a mobile phone, a tablet computer, a notebook computer, a palmtop computer, an vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in the embodiments of this application.

The network connection apparatus in the embodiment of this application may be an apparatus having an operating system. The operating system may be an Android (Android) operating system, an iOS operating system, or other possible operating systems. This is not specifically limited in the embodiments of this application.

The network connection apparatus provided in the embodiment of this application can implement each process implemented in the above method embodiments. To avoid repetition, details are not described herein again.

Optionally, as shown in FIG. 4, an embodiment of this application further provides an electronic device 410 including a processor 411, a memory 412, and a program or instructions stored on the memory 412 and capable of running on the processor 411. When the program or instructions are executed by the processor 411, the steps of any one of the above network connection method embodiments are implemented, with the same technical effects achieved. To avoid repetition, details are not described herein again.

It should be noted that the electronic device in this embodiment of this application includes the foregoing mobile electronic device and non-mobile electronic device.

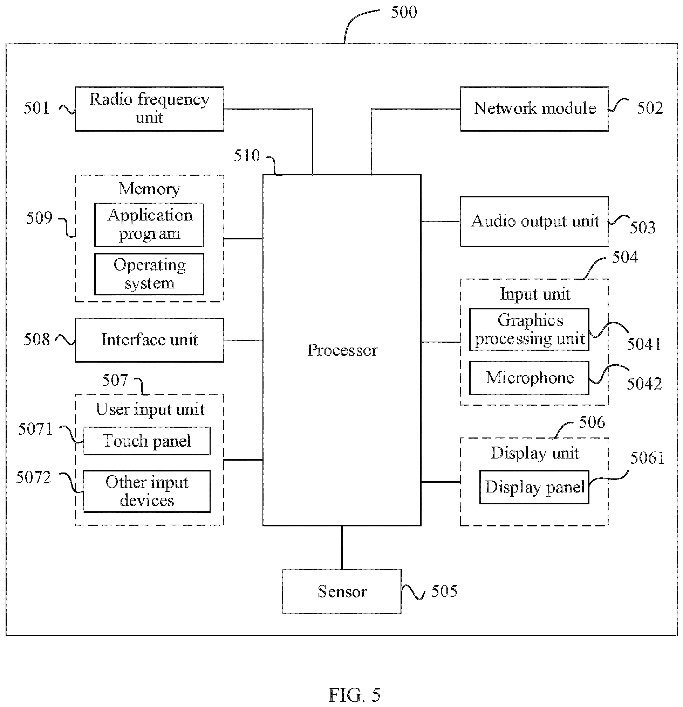

FIG. 5 is a schematic diagram of a hardware structure of an electronic device according to an embodiment of this application.

The electronic device 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

Those skilled in the art can understand that the electronic device 500 may further include a power supply (for example, a battery) that supplies power to various components. The power supply may be logically connected to the processor 510 through a power management system, so as to implement functions such as charge and discharge management and power consumption management by using the power management system. The structure of the electronic device shown in FIG. 5 does not constitute a limitation on the electronic device. The electronic device may include more or fewer components than shown in the figure, or a combination of some components, or the components disposed differently. Details are not described herein.

The processor 510 is configured to establish a first packet data network PDN connection through a first mobile communication network.

The network module 502 is configured to send registration request information to a second mobile communication network in a case that a data network of the electronic device is in a disabled state.

The processor 510 is further configured to disconnect the first PDN connection in a case that the first PDN connection is handed over from the first mobile communication network to the second mobile communication network.

Optionally, the processor 510 is further configured to hand over the first PDN connection from the first mobile communication network to the second mobile communication network according to preset protocol conversion information in a case that a network switching condition is met.

Optionally, the network module 502 is further configured to send disconnection request information to the network device in a case that the first PDN connection is handed over from the first mobile communication network to the second mobile communication network, where the disconnection request information is used to request the network device to disconnect the first PDN connection.

Optionally, the processor 510 is further configured to switch the data network to a disabled state in a case that a user input for disabling the data network is received.

The processor 510 is further configured to switch the data network to a disabled state in a case that the electronic device is in a target operation state.

Optionally, the network module 502 is further configured to send the registration request information to the second mobile communication network in a case that a second SIM card establishes a second PDN connection through the first mobile communication network.

The processor 510 is further configured to disconnect the second PDN connection in a case that the second SIM card hands over the second PDN connection from the first mobile communication network to the second mobile communication network.

Optionally, the processor 510 is further configured to, in a case that a fourth SIM card is in a network environment of the second mobile communication network, prohibit the fourth SIM card from establishing a PDN connection.

In the embodiment of this application, a first packet data network PDN connection is established through the first mobile communication network. If the data network is in a disabled state, it indicates that the user does not need to use the data network. Therefore, in a case that the data network of the electronic device is in a disabled state, registration request information is sent to the second mobile communication network. In a case that the first PDN connection is handed over from the first mobile communication network to the second mobile communication network, the first PDN connection is disconnected. Herein, in the process of registering the second mobile communication network for internet access, the first PDN connection can be entirely disconnected, ensuring that the electronic device no longer receives information from the network device side when the data network is in a disabled state. Moreover, in a case that the first PDN connection is handed over to the second mobile communication network, the first PDN connection is disconnected, which complies with operator requirements. This can reduce the data traffic generated by the electronic device and reduce the power consumption of the electronic device.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061. The display panel 5061 may be configured in a form of a liquid crystal display, an organic light-emitting diode, or the like. The user input unit 507 includes at least one of a touch panel 5071 and other input devices 5072. The touch panel 5071 is also known as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a joystick, and the like. Details are not described herein. The memory 509 may be configured to store software programs and various data, including but not limited to application programs and an operating system. The processor 510 may integrate an application processor and a modem processor. The application processor mainly processes an operating system, a user interface, an application program, and the like. The modem processor mainly processes wireless communication. It can be understood that the modem processor may alternatively be not integrated in the processor 510.

The memory 509 may be configured to store software programs and various data. The memory 509 may mainly include a first storage area for storing programs or instructions and a second storage area for storing data. The first storage area may store an operating system, an application program or instructions required by at least one function (for example, a sound play function or an image play function), and the like. In addition, the memory 509 may include a volatile memory or a non-volatile memory, or the memory x09 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 509 in the embodiment of this application includes but is not limited to these and any other suitable types of memory.

The processor 510 may include one or more processing units. Optionally, an application processor and a modem processor are integrated in the processor 510, where the application processor mainly processes operations related to an operating system, a user interface, an application program, and the like, and the modem processor mainly processes wireless communication signals, such as a baseband processor. It can be understood that the modem processor may alternatively be not integrated in the processor 510.

An embodiment of this application further provides a readable storage medium. The readable storage medium stores a program or instructions. When the program or instructions are executed by a processor, the processes of the foregoing network connection method embodiment are implemented, with the same technical effects achieved. To avoid repetition, details are not described herein again.

The processor is a processor in the electronic device described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing network connection method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the program product is stored in a storage medium, and the program product is executed by at least one processor to implement each process of the above network connection method embodiment, achieving the same technical effect. To avoid repetition, it is not elaborated here.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiments may also be implemented by hardware. However, in many cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to these specific embodiments. The specific embodiments are merely illustrative rather than restrictive. Inspired by this application, persons of ordinary skill in the art may develop many other forms without departing from the principle of this application and the protection scope of the claims, and all such forms fall within the protection scope of this application.

## Claims

1. A network connection method, applied to an electronic device, wherein the method comprises:
establishing a first packet data network PDN connection through a first mobile communication network;
sending registration request information to a second mobile communication network in a case that a data network of the electronic device is in a disabled state; and
disconnecting the first PDN connection in a case that the first PDN connection is handed over from the first mobile communication network to the second mobile communication network.

2. The method according to claim 1, wherein before the sending registration request information to a second mobile communication network, the method further comprises:
handing over the first PDN connection from the first mobile communication network to the second mobile communication network according to preset protocol conversion information in a case that a network switching condition is met.

3. The method according to claim 1, wherein the disconnecting the first PDN connection in a case that the first PDN connection is handed over from the first mobile communication network to the second mobile communication network comprises:
sending disconnection request information to a network device in a case that the first PDN connection is handed over from the first mobile communication network to the second mobile communication network, wherein the disconnection request information is used to request the network device to disconnect the first PDN connection.

4. The method according to claim 1, wherein before the sending registration request information to a second mobile communication network, the method further comprises:
switching the data network to a disabled state in a case that a user input for disabling the data network is received; or
switching the data network to a disabled state in a case that the electronic device is in a target operation state.

5. The method according to claim 2, wherein the network switching condition comprises at least one of the following:
a signal strength of the second mobile communication network is greater than a preset threshold;
a first instruction input by a user is received, wherein the first instruction is used to instruct to switch to the second mobile communication network; and
a second instruction sent by a network device is received, wherein the second instruction is used to instruct to switch to the second mobile communication network.

6. The method according to claim 1, wherein the steps of the method according to claim 1 are performed based on a first subscriber identity module SIM card, and the method further comprises:
sending the registration request information to the second mobile communication network in a case that a second SIM card establishes a second PDN connection through the first mobile communication network; and
disconnecting the second PDN connection in a case that the second SIM card hands over the second PDN connection from the first mobile communication network to the second mobile communication network.

7. The method according to claim 1, wherein the steps of the method according to claim 1 are performed based on a third SIM card, and the method further comprises:
in a case that a fourth SIM card is in a network environment of the second mobile communication network, prohibiting the fourth SIM card from establishing a PDN connection.

8. A network connection apparatus, wherein the apparatus comprises:
an establishment module, configured to establish a first packet data network PDN connection through a first mobile communication network;
a sending module, configured to send registration request information to a second mobile communication network in a case that a data network of the electronic device is in a disabled state; and
a disconnection module, configured to disconnect the first PDN connection in a case that the first PDN connection is handed over from the first mobile communication network to the second mobile communication network.

9. The apparatus according to claim 8, wherein the apparatus further comprises:
a handover module, configured to hand over the first PDN connection from the first mobile communication network to the second mobile communication network according to preset protocol conversion information in a case that a network switching condition is met.

10. The apparatus according to claim 8, wherein the disconnection module is specifically configured to:
send disconnection request information to a network device in a case that the first PDN connection is handed over from the first mobile communication network to the second mobile communication network, wherein the disconnection request information is used to request the network device to disconnect the first PDN connection.

11. The apparatus according to claim 8, wherein the apparatus further comprises:
a first switching module, configured to switch the data network to a disabled state in a case that a user input for disabling the data network is received; and
a second switching module, configured to switch the data network to a disabled state in a case that the electronic device is in a target operation state.

12. The apparatus according to claim 9, wherein the network switching condition comprises at least one of the following:
a signal strength of the second mobile communication network is greater than a preset threshold;
a first instruction input by a user is received, wherein the first instruction is used to instruct to switch to the second mobile communication network; and
a second instruction sent by a network device is received, wherein the second instruction is used to instruct to switch to the second mobile communication network.

13. The apparatus according to claim 8, wherein the steps that the establishment module, the sending module, and the disconnection module are configured to perform are performed based on a first subscriber identity module SIM card, and the apparatus further comprises:
a first sending module, configured to send the registration request information to the second mobile communication network in a case that a second SIM card establishes a second PDN connection through the first mobile communication network; wherein
the disconnection module is further configured to disconnect the second PDN connection in a case that the second SIM card hands over the second PDN connection from the first mobile communication network to the second mobile communication network.

14. The apparatus according to claim 8, wherein the steps that the establishment module, the sending module, and the disconnection module are configured to perform are performed based on a third SIM card, and the apparatus further comprises:
a prohibition module, configured to, in a case that a fourth SIM card is in a network environment of the second mobile communication network, prohibit the fourth SIM card from establishing a PDN connection.

15. An electronic device, comprising a processor and a memory, wherein the memory stores a program or instructions capable of running on the processor, and when the program or instructions are executed by the processor, the steps of the method according to any one of claims 1 to 7 are implemented.

16. A readable storage medium, wherein the readable storage medium stores a program or instruction, and when the program or instruction is executed by a processor, the steps of the method according to any one of claims 1 to 7 are implemented.

17. A chip, wherein the chip comprises a processor and a communication interface, wherein the communication interface is coupled to the processor, and the processor is configured to run a program or instructions to implement the method according to any one of claims 1 to 7.

18. A computer program product, wherein the program product is stored in a non-volatile storage medium, and the program product is executed by at least one processor to implement the method according to any one of claims 1 to 7.
